# EUROPEAN PATENT SPECIFICATION

(11) **EP 1 922 796 B1**
(45) Date of publication and mention of the grant of the patent: **17.10.2012**
(21) Application number: 06735830.9
(22) Date of filing: 21.02.2006
(51) Int. Cl.: H02K 1/22, H02K 21/26, H01R 39/38, H02K 23/04, H02K 23/54, H01R 39/06

(54) **MONOPOLE FILED ELECTRIC MOTOR GENERATOR**
ELEKTRISCHER MOTOR-GENERATOR MIT MONOPOLFELD
GENERATEUR DE MOTEUR ELECTRIQUE A CHAMP UNIPOLAIRE

(30) Priority: 09.08.2005 US 200920
(43) Date of publication of application: 21.05.2008
(73) Proprietor: Bojiuc, Dumitru, Marina del Rey CA 90292 (US)
(72) Inventor: Bojiuc, Dumitru, Marina del Rey CA 90292 (US)
(74) Representative: Hocking, Adrian Niall
(86) International application number: PCT/US2006/006326
(87) International publication number: WO 2007/021310

(56) References cited:
- EP-A1- 0 018 563
- WO-A1-89/12347
- DE-A1- 3 140 437
- GB-A- 2 255 452
- US-A- 3 466 483
- US-A- 3 466 483
- US-A- 3 487 246
- US-A- 3 487 246
- US-A- 5 278 470
- US-A- 5 977 684
- US-B1- 6 246 146
- US-B2- 6 605 883
- US-B2- 6 794 783

## Description

### Background

### Related Applications

This application claims international priority from a prior filed U.S. Utility Patent Application having serial number 11200920 filed on August 9, 2005.

### Field of the Present Disclosure

This disclosure relates generally to electric motors and electric generators and more particularly to such rotating electromagnetic machines having monopole fields.

### Description of Related Art

The following art defines the present state of the field of the apparatus described and claimed herein:

Tu et al, US 2004/0135452, discloses a flat rotary electric generator that includes at least one toroidal coil structure for cutting magnetic lines to induce a current and at least one disc-shaped magnetic pole structure oriented parallel to the helical coil structure. If multiple toroidal coil structures and disc-shaped magnetic coil structures are included, the toroidal coil structures and disc-shaped magnetic coil structures are arranged in alternating manner. The toroidal coil structure and disc-shaped magnetic pole structure are not provided with a permeable material. When either the toroidal coil structures or the at least one disc-shaped magnetic pole structure is rotated by an external force, the toroidal coil structure cuts the magnetic lines passing therethrough to generate an induced current. Neal, US 2002/0135263, discloses a plurality of stator arc segments that form a toroidal core for a stator assembly used to make a motor. In a preferred embodiment, a plurality of magnetic fields is created when electrical current is conducted through wire wound around poles on the toroidal core. A monolithic body of phase change material substantially encapsulates the conductors and holds the stator arc segments in contact with each other in the toroidal core. Hard disc drives using the motor, and methods of constructing the motor and hard disc drives are also disclosed. Rose, US 6803691, discloses an electrical machine that comprises a magnetically permeable ring-shaped core centered on an axis of rotation and having two axially-opposite sides. Coils are wound toroidally about the core and disposed sequentially along the circumferential direction. Each coil includes two side legs extending radially alongside respectively sides of the core. Coil-free spaces exist between adjacent side legs. A bracket has first and second side flanges that are connected by a bridging structure and respectively abut the first and second sides of the coil. Mohler, US 6507257, discloses a bi-directional latching actuator that is comprised of an output shaft with one or more rotors fixedly mounted thereon. The shaft and rotor are mounted for rotation in a magnetically conductive housing having a cylindrical coil mounted therein and is closed by conductive end caps. The end caps have stator pole pieces mounted thereon. In one embodiment, the rotor has at least two oppositely magnetized permanent magnets which are asymmetrically mounted, i.e., they are adjacent at one side and separated by a nonmagnetic void on the other side. The stator pole piece has asymmetric flux conductivity and in one embodiment is axially thicker than the remaining portion of the pole piece. An abutment prevents the rotor from swinging to the neutral position (where the rotor magnets are axially aligned with the higher conductivity portion of the pole piece). Thus, the rotor is magnetically latched in one of two positions being drawn towards the neutral position. Energization of the coil with an opposite polarity current causes the rotor to rotate towards its opposite latching position whereupon it is magnetically latched in that position. Mohler, US 5337030, discloses a permanent magnet brushless torque actuator that is comprised of an electromagnetic core capable of generating an elongated toroidally shaped magnet flux field when energized. Outside the generally cylindrical coil is an outer housing with upper and lower end plates at each end. Mounted to the end plates and extending towards each other are stator pole pieces separated from its opposing pole piece by an air gap. A permanent magnet rotor is disposed in the air gap and mounted on a shaft which in turn is rotatably mounted in each of the end plates. The permanent magnet rotor comprises at least two permanent magnets, each covering an arcuate portion of the rotor and having opposite polarities. Energization of the coil with current in one direction magnetizes the pole pieces such that each of the two pole pieces attracts one of the magnets of the rotor and repels the other magnet of the rotor resulting in a torque generated by the output shaft. Reversal of the current flow results in a reversal of the torque and rotation of the rotor in the opposite direction. Preferred embodiments are disclosed having multiple cells, i.e. a plurality of stator rotor stator combinations and/or cells in which there are a plurality of pole pieces at each stator pole plane. Kloosterhouse et al, US 5191255, discloses an electromagnetic motor that includes a rotor having a plurality of magnets mounted along a perimeter of the rotor. Preferably, adjacent magnets have opposite poles facing outward. One or more electromagnets are disposed adjacent to the perimeter of the rotor so that as the rotor rotates, the magnets mounted on the rotor are carried near the poles of the electromagnets. Current is supplied to the electromagnets by a drive circuit in a predetermined phase relationship with the rotation of the rotor such that, for substantially all angular positions of the rotor, magnetic attraction and repulsion between the poles of the electromagnets and the magnets mounted on the rotor urge the rotor to rotate in a desired direction. Reflective material is mounted on the rotor in predetermined angular positions. The drive circuit includes a photosensitive device which produces a signal whose value varies according to whether the device is receiving light reflected from the reflective material. The signal is amplified to produce drive current for the electromagnets. Westley, US 4623909, discloses a stepper motor housing a pole structure in which a pair of identical stator plates, each having a plurality of poles, are positioned back to back with the poles projecting in opposite directions, the stator plates being positioned between a pair of substantially identical stator cups, each stator cup having a plurality of poles projecting inwardly from a back wall with a peripheral side wall terminating in an outwardly extending flange. A major surface of each flange is in contact with a face on one of the stator plates so as to assure a low reluctance magnetic path. Fawzy, US 4565938, discloses an electromechanical device which can be used as a motor or as a generator. The device has a housing, including bearing means to support a rotatable shaft. Disc magnet means are provided, and poled to have alternating polarity and are mounted on the shaft to define a rotor. The device includes at least one first pole shoe in contact with the magnet means, having a portion extending radially therefrom to define a virtual pole chamber, of a first polarity. Also included is at least one second pole shoe in contact with the magnet and having a portion extending radially therefrom to define a virtual pole chamber of the other polarity. A toroid stator is mounted on the housing and has windings thereon. The stator is positioned annularly around the disc magnets such that the virtual pole chambers of the first and second pole shoes surround portions of said windings with circumferentially alternating fields of alternating polarity. Means are provided for electrical contact with the stator to draw off current when the device is operated as a generator, or provide current to operate the device as a motor. Fawzy, US 4459501, discloses an electromechanical device which can be used as a motor or as a generator that has a housing, including bearing means to support a rotatable shaft. A pair of disc magnets are poled to have opposite polarity on the two faces of each. The magnets are mounted face to face together on the shaft to define a rotor. The device includes at least one first pole shoe in contact with one face of each magnet, and having a portion extending radially therefrom to define, in its preferred form, a pair of virtual pole chambers, of the same polarity as said one face. Also included is at least one second pole shoe in contact with the other face of each magnet and having a portion extending radially therefrom to define in its preferred form a pair of virtual pole chambers of the same polarity as the other face. A toroid stator is mounted on the housing and has windings thereon. The stator is positioned annularly around the disc magnets such that the virtual pole chambers of the first and second pole shoes surround portions of said windings with circumferentially alternating fields of alternating polarity. Means for electrical contact with the stator draw off current when the device is operated as a generator, or provide current to operate the device as a motor.
DE 31 40 437 A1 to Volkrodt, upon which the preamble of claim 1 is based, discloses a rotating electromagnetic apparatus comprising a stator and a rotor supported on an axle within housing. The brush assembly is provided to one side of the rotor.
GB 2 255 452 A to Pal Adam et al and EP 0 018 563 A1 to Humbert both disclose permanent magnet rotating electric DC-machines with commutators and disc-shaped rotors with toroidal windings.
By contrast, US 3,487,246 to Long proposes an electric machine having a rotor including a shaft and a stator supporting the shaft, the rotor further including a thin insulating member adapted to rotate with the shaft and formed to provide a conical surface, the insulating member diverging outwardly around the shaft at a selected angle within the range between zero and ninety degrees to the axis of the shaft. The conical shaped of the armature is advantageous in providing a convenient space in and under the armature for reduction gearing which is often required in electric motors, for example. It should be noted, however, that Long teaches that disc shaped armatures have many disadvantages, for example, they are prone to warping and dragging on or hitting the stator field members.

Our prior art search with abstracts described above teaches rotating electromagnet machines; in both motor and generator forms. Thus, the prior art shows in Neal, a toroidal core with radial arc segments, in Fawzy, we see a N-N and S-S pole face adjacency, in Tu et aI, a N-S and S-N pole adjacency with radial coil windings, in Rose, we find radially wound coils in sequence around a toroidal core and with permanent magnet segments with N-N and S-S adjacency. However, the prior art fails to teach a rotating electromagnetic machine that provides electromagnetic fields immersed in monopole permanent magnet fields of opposite polarities as is shown in the present apparatus.

### Summary

The present invention refers to a rotating electromagnetic apparatus as defined in the independent claim 1. Further embodiments of the invention are claimed in the dependent claims 2 to 6.

This disclosure teaches certain benefits in construction and use which give rise to the objectives described below.

An objective is to provide an electromagnetic rotating machine with superior torque relative to conventional machines.

A further objective is to provide such a machine useful as an electric motor.

A further objective is to provide such a machine useful as an electric generator.

A further objective is to provide such a machine that is able to be operated as a DC or as an AC device.

A still further objective is to provide such a machine that is useful as a power converter.

Other features and advantages of the described apparatus and method of use will become apparent from the following more detailed description, taken in conjunction with the accompanying drawings, which illustrate, by way of example, the principles of the presently described apparatus and method of its use.

### Brief Description of the Drawings

The accompanying drawings illustrate at least one of the best mode embodiments of the present invention. In such drawings:

Figure 1 is an elevational view of a rotor of the apparatus showing a commutator and brushes;

Figure 2 is a vertical cross-sectional view thereof taken along line 2-2 in Fig. 1;

Figure 3 is a perspective view thereof conceptually showing the stator as two pair of semicircular magnet sets, with the rotor positioned medially;

Figure 4 is a perspective view thereof conceptually showing the stator as rings of four magnet sets, with the rotor positioned medially;

Figure 5 is a perspective view thereof conceptually showing the stator as rings of eight magnet sets, with the rotor positioned medially;

Figure 6 is a perspective view thereof conceptually showing the stator as rings of twelve magnet sets, with the rotor positioned medially;

Figure 7 is a perspective view thereof showing construction details of the rotor;

Figure 8 is a cross-sectional view thereof showing the commutator and brushes of the apparatus;

Figure 9 is a side elevational view thereof showing the commutator and brushes;

Figure 10 is an electrical schematic diagram thereof configured for DC operation with high torque and moderate speed;

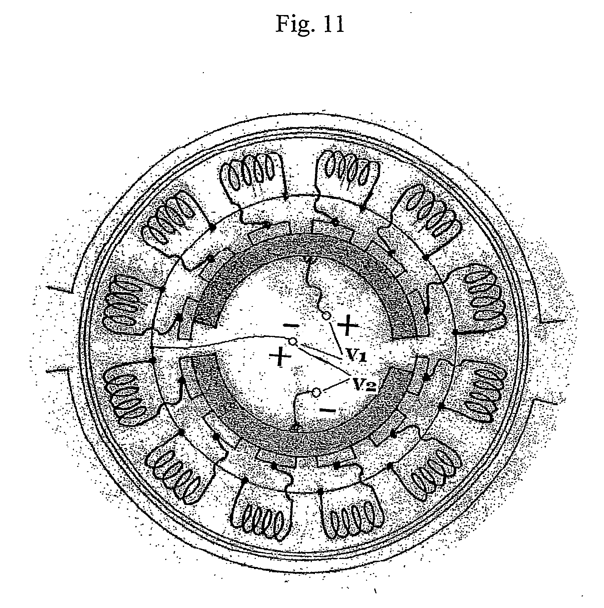

Figure 11 is an electrical schematic diagram thereof configured for DC operation with high speed and high torque;

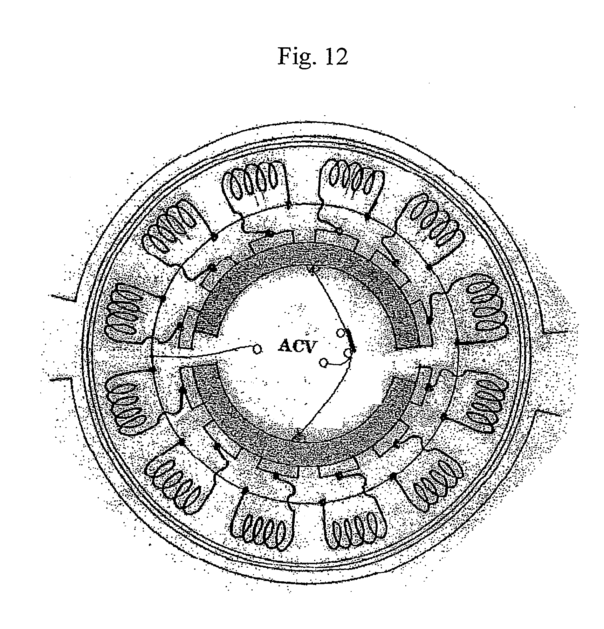

Figure 12 is an electrical schematic diagram thereof configured for AC operation;

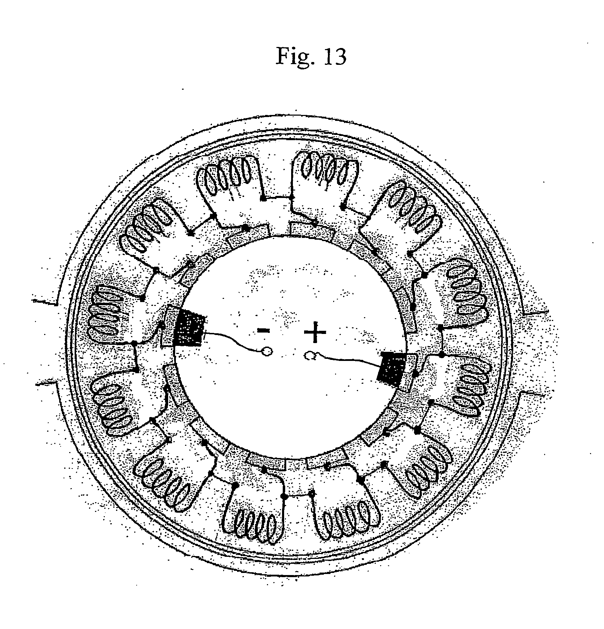

Figure 13 is an electrical schematic diagram thereof configured for DC operation with low current and high speed; and

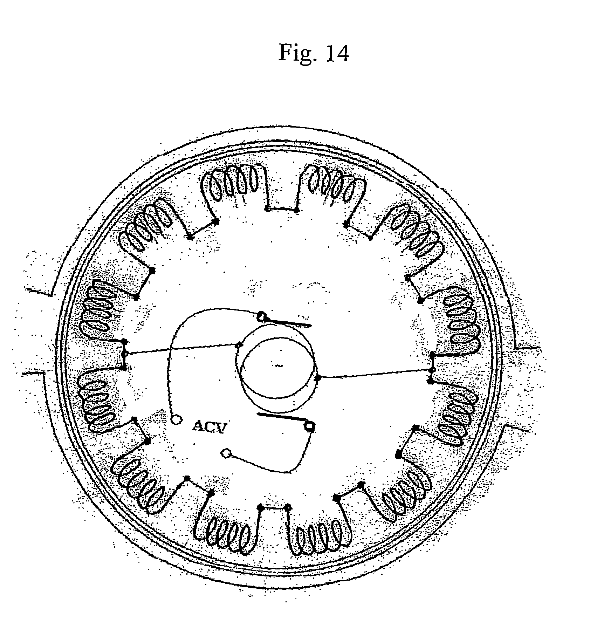

Figure 14 is an electrical schematic diagram thereof configured for AC operation with high voltage.

### Detailed Description

The above described drawing figures illustrate the invention and its method of use in at least one of its preferred, best mode embodiments, which is further defined in detail in the following description. Therefore, it must be understood that what is illustrated is set forth only for the purposes of example.

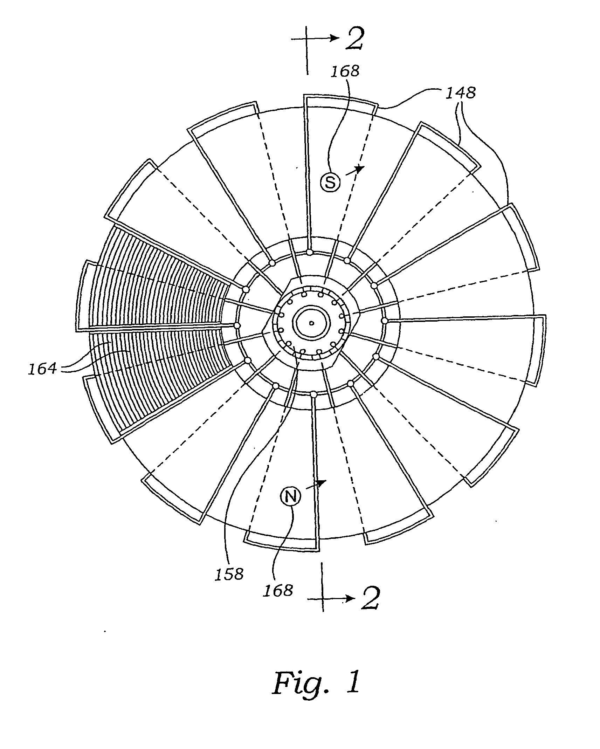

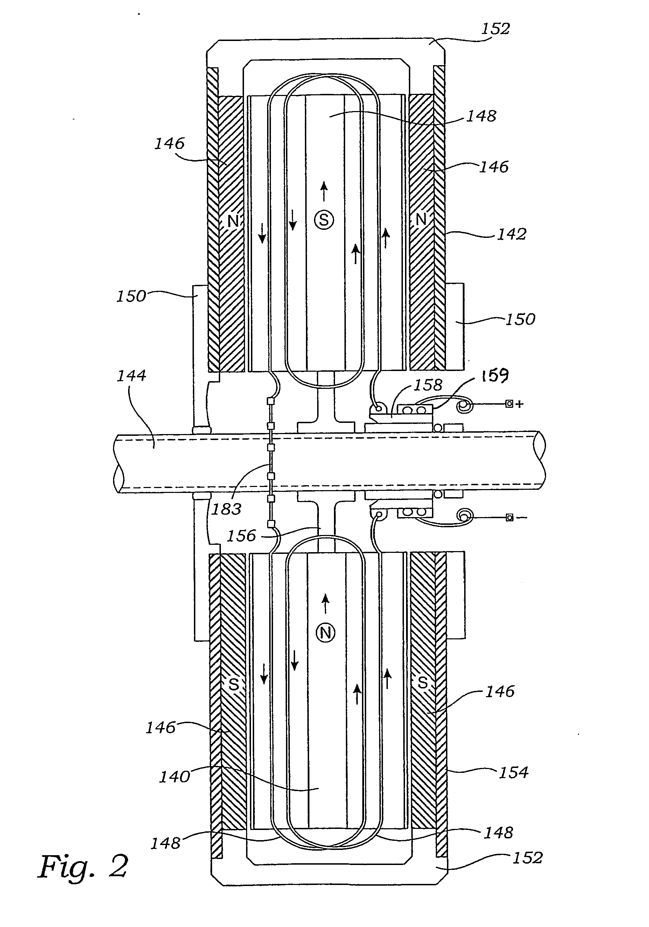

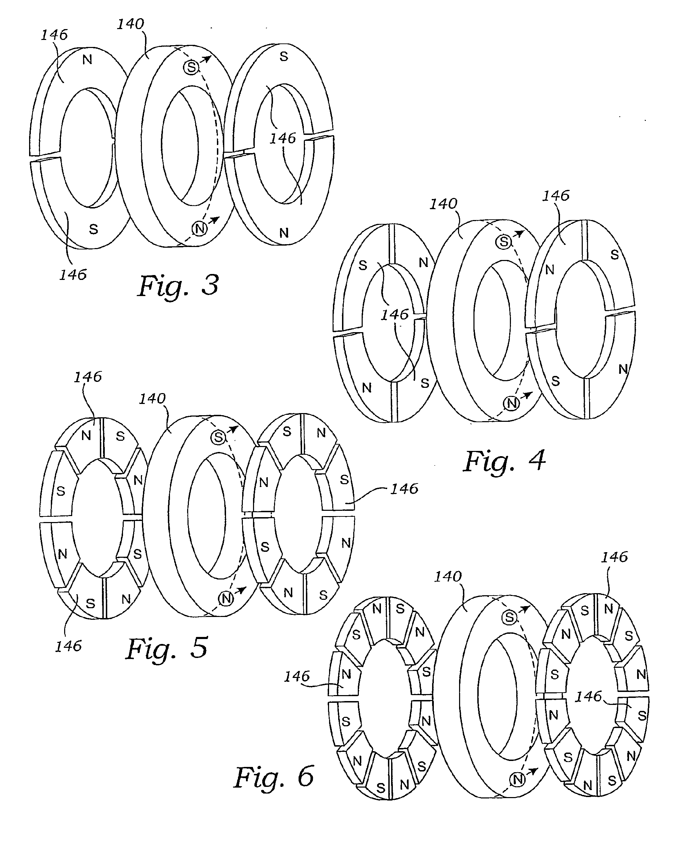

A rotating electromagnetic apparatus comprises a stator including a stator frame 152 supporting parallel spaced apart, disc-shaped permanent magnet sets, wherein each of the magnet sets comprises plural, spaced apart, co-planar magnet segments 146. The segments 146 are arranged with pairs of opposing N-N and S-S permanent magnet poles, as shown by the letters "S" for south pole and "N" for north pole, of opposite polarity in alternating circumferential sequence as is shown in Figs. 3-6 depicting four separate possible configurations of the magnet sets. A rotor provides a magnetically permeable rotating rotor frame 140 mounted on, and rotating with, an axle 144 which is supported by the stator frame 152 as shown in Fig. 2. Rotor frame 140 includes central structural element 156 fixed to axle 144. The rotor frame 140 provides a plurality of radially oriented, toroidally wound coils 148 as shown in Figs. 1, 2 and 10. Like poles of the magnet segments 146 are in opposing, face-to-face positions with the rotor positioned therebetween. A current supplying commutator 158 engages the rotor such that each of the coils 148 provide, on each side of its plane, an electromagnet active monopole 168 as shown in Fig. 1, which are positioned for attraction or repulsion of the adjacent permanent magnet poles in a manner causing rotation of the rotor. The permanent magnets induce magnetic monopole fields in the ferromagnetic core. Axle 144 rotates within a bearing in frame 152 and the frame 152 includes structural elements 150 for supporting the stator.

The magnet segments 146 may comprise two semicircular segments as shown in Fig. 3, four segments in quadrature, as shown in Fig. 4, eight segments, as shown in Fig. 5, twelve segments, as shown in Fig. 6, or may comprise any number of such segments 148. The segments 146 are mounted on discs 142 made of ferromagnetic material. When more than two segments are used, the commutator is also segmented accordingly. In the following description, we shall discuss the configuration shown in Fig. 3, however, the basic principals of the present apparatus and theory of operation apply as well to Figs. 4-6.

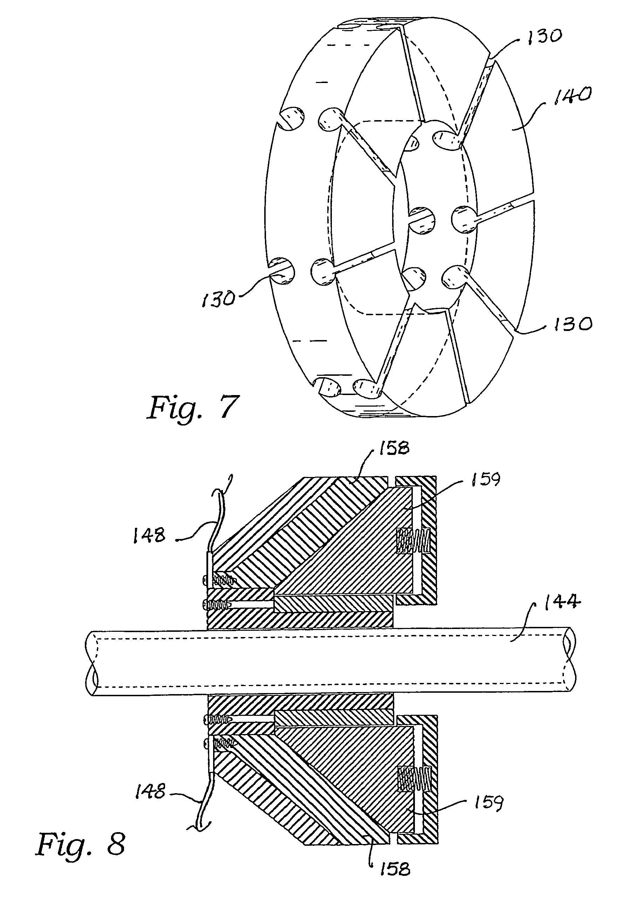

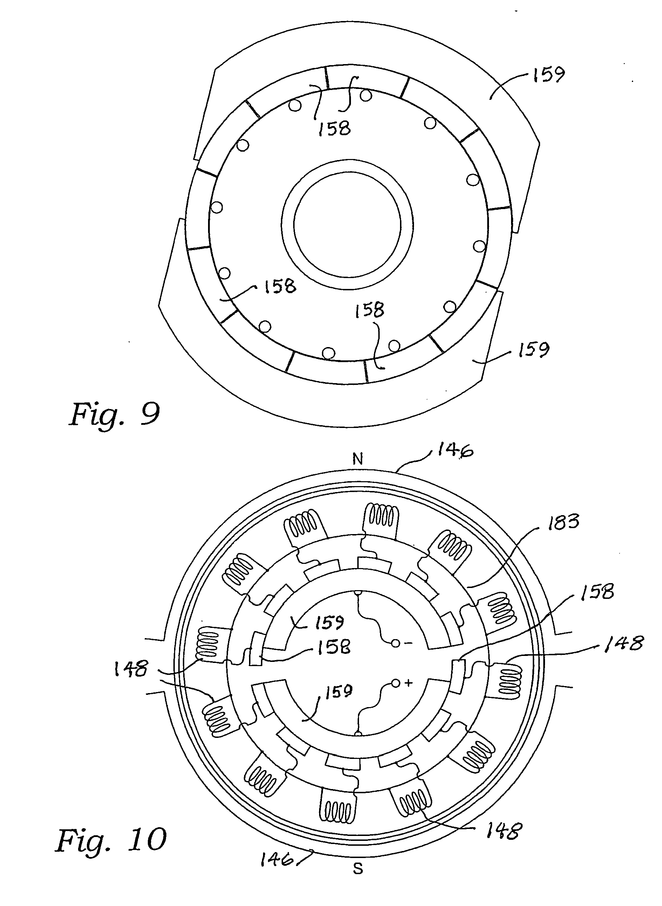

The rotor frame 140 may be made up of layers of ferromagnetic sheet material 164 as shown in Fig. 1, or it may be a monolithic sintered ferrite part as shown in Fig. 7 which eliminates hysteresis. Electrical conductors in the form of insulated wires are wound into coils 148 within radial slots 130 formed in the rotor frame 140 (Fig. 7). These coils 148 are interconnected as shown in Fig. 10, i.e., all of the coils 148 are wired so as to have an electrically common point 183 in Figs. 2 and 10 at one end of the coils 148. The other end of each of the coils 148 is connected to an electrical contact 158 on which wiper 159 slides, as best shown in Fig. 8.

In Fig. 8 we see that the electrical contacts 158 are preferably set at an angle to the axis of axel 144 to obtain improved contact surface area with wipers 159, which are spring loaded for continuous contact with the electrical contacts 158. In Fig. 9 we see that the electrical contacts 158 are set very close together, but it is noted that they do not touch each other.

In operation, the apparatus is set into rotational motion, the rotor rotating between and in close adjacency on both of its sides to the stator. Referring now to Fig. 10, it is seen that, in the preferred embodiment of the current apparatus, a pair of permanent magnet north poles N of semicircular segment 146 configuration are in close proximity to one half of the coils 148 at each instant, while a pair of permanent magnet south pole S semicircular segments 146 are in close proximity to the other half of the coils 148. The coils sandwiched between the N pole magnets are polarized by current flow through the commutator 159 to produce magnetic field alignments that result in rotational forces. To understand this, it is important to recognize that the ferromagnetic rotor body 140 that is instantaneously positioned 5 between the N pole permanent magnet segments 146 is induced as a south pole S. Each of the coils 148 mounted in the rotor body 140 that are also between the N pole permanent magnet segments 146 have a current sense producing a magnetic field that causes attraction to the rotor body 140 to product an electromotive force in the direction of rotation. Likewise, the same effect with opposite polarities occurs for those coils 148 that are between the S pole magnet segments 146.

Generally, the present apparatus is a rotating electromagnetic machine having a stator which provides at least one permanent monopole magnetic field within its interior space. A ferromagnetic toroidal rotor body 140 has an outer circumference 140', and inner circumference 140" as shown in Fig. 7. The body 140 also includes two opposing side walls 140"'. The rotor body 140 is immersed in the permanent magnetic field and thereby has induced into it, a monopole magnetic field of opposite polarity. A plurality of current carrying electrical coils 148 are wound around the rotor body within radially directed slots 130 on both of the side walls 140"' of the rotor body 140. The electrical coils 148 produce a electromagnetic field directed along a sense of rotation of the rotor body within the stator thereby producing an electromotive force.

Assuming electron current flow from the positive terminal (+) to the negative terminal (-), the flow is therefore through all of the coils 148 associated with the permanent S pole first, and then through all of the coils 148 associated with the permanent N pole. As coils 148 transfer across the gap between the positive and negative commutator (brushes) 159 current flow reverses and then so does the force exerted on the coils 148, and since the permanent magnetic field also reverses its polarity at the same time, the rotor develops a constant rotational force. It is the fact that the coils 148 find themselves immersed within a monopole, i.e., either a N pole field or a S pole field, that they develop an electromotive force significantly larger then alternative electromagnetic rotating machines.

## Claims

1. A rotating electromagnetic apparatus comprising: a stator including a stator frame (152) supporting parallel spaced apart, toroidally-shaped permanent magnet sets, each of the magnet sets formed as plural, spaced apart, co-planar magnet segments (146), the segments (146) arranged with permanent magnet poles of opposite polarity in alternating sequence; a rotor providing a magnetically permeable, toroidally shaped rotor frame (140) having an outer circumference, an inner circumference and a pair of side surfaces, the rotor frame (140) mounted on an axle (144) supported by the stator frame (152), the rotor frame (140) providing a plurality of radially directed through slots (130) extending between the outer and inner circumferences of the rotor frame (140), the slots (130) positioned in laterally spaced apart pairs around the rotor frame (140), each of the slots (130) of the slots pairs open to one of the sides of the rotor frame (140); a toroidally wound coil (148) wound within each of the pairs of slots(130); each opposing pair of coils (148) being in electrical series connection, like poles of the magnet sets positioned in opposing, face-to-face positions with the rotor therebetween; and a commutator comprising plural electrical contacts (158) and plural wipers (159) engaged for providing electrical current to the coils, ***characterised in that*** the electrical contacts (158) are engaged for rotation with the rotor and are arranged circularly concentric with the axle (144), each of the electrical contacts (158) being configured with a pair of diverging contact surfaces, the wipers (159) being wedge shaped and engaged with the stator, each of the wipers (159) being positioned for contact with the said pair of diverging contact surfaces as the rotor revolves.

2. The apparatus of claim 1 wherein the magnet segments (146) comprise two semicircular segments.

3. The apparatus of claim 1 wherein the magnet segments (146) comprise four segments in quadrature.

4. The apparatus of claim 1 wherein the magnet segments (146) comprise eight segments.

5. The apparatus of claim 1 wherein the magnet segments (146) comprise twelve segments.

6. The rotating electromagnetic apparatus of clam 1 wherein the rotor frame (140) is of monolithic sintered ferrite; the magnet sets arranged to produce alternating monopole magnetic fields, the rotor frame (140) thereby having induced monopole magnetic fields of opposing polarity to the alternating monopole magnetic fields.

## Patentansprüche

1. Elektromagnetische Rotationsvorrichtung, umfassend: einen Stator mit einem Statorgehäuse (152), das parallele beabstandete ringförmige Permanentmagnetsätze trägt, wobei jeder der Magnetsätze aus mehreren beabstandeten coplanaren Magnetsegmenten (146) ausgebildet ist, wobei die Segmente (146) in abwechselnder Sequenz mit Permanentmagnetpolen gegensätzlicher Polarität angeordnet sind; einen Rotor, der ein magnetisch permeables ringförmiges Rotorgehäuse (140) mit einem Außenumfang, einem Innenumfang und einem Paar Seitenflächen bereitstellt, wobei das Rotorgestell (140) an einer Achse (144) befestigt ist, die vom Statorgehäuse (152) getragen wird, wobei das Rotorgehäuse (140) eine Mehrzahl von radial gerichteten Durchgangsschlitzen (130) bereitstellt, die sich zwischen dem Außen- und dem Innenumfang des Rotorgehäuses (140) erstrecken, wobei die Schlitze (130) in seitlich beabstandeten Paaren um das Rotorgehäuse (140) positioniert sind, wobei jeder der Schlitze (130) der Schlitzpaare zu einer der Seiten des Rotorgehäuses (140) offen ist; eine ringförmig gewickelte Spule (148), die innerhalb jedes der Paare von Schlitzen (130) gewickelt ist; wobei jedes gegenüberliegende Schlitzpaar (148) in elektrischer Serienschaltung vorliegt, wobei gleiche Pole der Magnetsätze an einander gegenüberliegenden Positionen mit dem Rotor dazwischen angeordnet sind; und einen Gleichrichter, der eine Mehrzahl von elektrischen Kontakten (158) und mehrere Schleifer (159) umfasst, die verbunden sind, um die Spulen mit elektrischem Strom zu versorgen, **dadurch gekennzeichnet, dass** die elektrischen Kontakte (158) zur Rotation mit dem Rotor verbunden und kreisförmig konzentrisch in Bezug auf die Achse (144) angeordnet sind, wobei jeder der elektrischen Kontakte (158) mit einem Paar auseinanderlaufender Kontaktflächen konfiguriert ist, wobei die Schleifer (159) keilförmig und mit dem Stator verbunden sind, wobei jeder der Schleifer (159) positioniert ist, um das Paar auseinanderlaufender Kontaktflächen zu berühren, wenn sich der Rotor dreht.

2. Verfahren nach Anspruch 1, wobei die Magnetsegmente (146) zwei halbkreisförmige Segmente umfassen.

3. Verfahren nach Anspruch 1, wobei die Magnetsegmente (146) vier Segmente in Quadratur umfassen.

4. Verfahren nach Anspruch 1, wobei die Magnetsegmente (146) acht Segmente umfassen.

5. Verfahren nach Anspruch 1, wobei die Magnetsegmente (146) zwölf Segmente umfassen.

6. Elektromagnetische Rotationsvorrichtung nach Anspruch 1, wobei das Rotorgehäuse (140) aus monolithischem gesintertem Ferrit besteht; wobei die Magnetsätze angeordnet sind, um abwechselnde magnetische Monopolfelder zu produzieren, wobei das Rotorgehäuse (140) dadurch induzierte magnetische Monopolfelder gegensätzlicher Polarität zu den sich abwechselnden magnetischen Monopolfeldern aufweist.

## Revendications

1. Appareil électromagnétique rotatif comprenant : un stator comprenant une carcasse de stator (152) supportant des ensembles d'aimants permanents de forme toroïdale, espacés, parallèles, chacun des ensembles d'aimants étant sous la forme de plusieurs segments (146) d'aimants coplanaires, espacés, les segments (146) étant disposés avec des pôles d'aimants permanents de polarité opposée dans une séquence alternée ; un rotor présentant une carcasse de rotor (140) de forme toroïdale, magnétiquement perméable, ayant une circonférence externe, une circonférence interne et une paire de surfaces latérales, la carcasse de rotor (140) étant montée sur un axe (144) supporté par la carcasse de stator (152), la carcasse de rotor (140) présentant une pluralité de fentes traversantes (130) dirigées radialement s'étendant entre les circonférences externe et interne de la carcasse de rotor (140), les fentes (130) étant positionnées en paires espacées latéralement autour de la carcasse de rotor (140), chacune des fentes (130) des paires de fentes s'ouvrant sur l'un des côtés de la carcasse de rotor (140) ; une bobine (148) enroulée de façon toroïdale, enroulée à l'intérieur de chacune des paires de fentes (130) ; chaque paire opposée de bobines (148) étant en montage électrique en série, comme les pôles des ensembles d'aimants positionnés dans des positions opposées, face à face, avec le rotor entre elles ; et un commutateur comprenant plusieurs contacts électriques (158) et plusieurs balais (159) engagés pour fournir un courant électrique aux bobines, ***caractérisé par le fait que*** les contacts électriques (158) sont engagés pour une rotation avec le rotor et sont disposés de façon circulairement concentrique avec l'axe (144), chacun des contacts électriques (158) étant configuré avec une paire de surfaces de contact divergentes, les balais (159) étant en forme de coin et engagés avec le stator, chacun des balais (159) étant positionné pour un contact avec ladite paire de surfaces de contact divergentes lorsque le rotor tourne.

2. Appareil selon la revendication 1, dans lequel les segments d'aimants (146) comprennent deux segments semi-circulaires.

3. Appareil selon la revendication 1, dans lequel les segments d'aimants (146) comprennent quatre segments en quadrature.

4. Appareil selon la revendication 1, dans lequel les segments d'aimants (146) comprennent huit segments.

5. Appareil selon la revendication 1, dans lequel les segments d'aimants (146) comprennent douze segments.

6. Appareil électromagnétique rotatif selon la revendication 1, dans lequel la carcasse de rotor (140) est faite de ferrite frittée monolithique ; les ensembles d'aimants étant agencés pour produire des champs magnétiques unipolaires alternatifs, la carcasse de rotor (140) ayant ainsi des champs magnétiques unipolaires induits de polarité opposée aux champs magnétiques unipolaires alternatifs.
